# EUROPÄISCHE PATENTSCHRIFT

(11) **EP 3 074 291 B1**
(45) Veröffentlichungstag und Bekanntmachung des Hinweises auf die Patenterteilung: **11.09.2019**
(21) Anmeldenummer: 14786820.2
(22) Anmeldetag: 07.10.2014
(51) Int. Cl.: B60W 40/08, B60W 50/00

(54) **VERFAHREN ZUR BEWERTUNG DES FAHRERVERHALTENS IN EINEM FAHRZEUG**
METHOD FOR EVALUATING THE BEHAVIOUR OF A DRIVER IN A VEHICLE
PROCÉDÉ D'ÉVALUATION DU COMPORTEMENT D'UN CONDUCTEUR DANS UN VÉHICULE AUTOMOBILE

(30) Priorität: 25.11.2013 DE 102013224026
(43) Veröffentlichungstag der Anmeldung: 05.10.2016
(73) Patentinhaber: Robert Bosch GmbH, 70442 Stuttgart (DE)
(72) Erfinder: BUERKLE, Lutz, 70199 Stuttgart (DE); GLAESER, Claudius, 71254 Ditzingen (DE); MICHALKE, Thomas, 70195 Stuttgart (DE)
(86) Internationale Anmeldenummer: PCT/EP2014/071450
(87) Internationale Veröffentlichungsnummer: WO 2015/074798

(56) Entgegenhaltungen:
- EP-A1- 2 111 796
- EP-A1- 2 591 969
- DE-A1-102012 000 629
- US-A1- 2004 209 594

## Beschreibung

### Stand der Technik

Die Erfindung bezieht sich auf ein Verfahren zur Bewertung des Fahrerverhaltens in einem Fahrzeug.

Bekannt sind Fahrerassistenzsysteme, welche mit Hilfe einer Sensorik den Fahrer bzw. den Fahrzeuginnenraum oder die Fahrzeugumgebung überwachen, wobei auf der Grundlage der Messwerte Stellsignale zur Beaufschlagung einer Aktorik ermittelt werden, mit der das Fahrverhalten des Fahrzeugs beeinflusst werden kann. Beispielsweise wird bei Bremsassistenzsystemen die Bremspedalbetätigung überwacht und selbsttätig ein Bremsdruck aufgebaut, wenn die Geschwindigkeit oder Beschleunigung der Pedalbetätigung einen Grenzwert übersteigt.

Bremsassistenzsysteme können gegebenenfalls auch mit einem elektrisch unterstützten Lenksystem mit einer Umfeldüberwachung gekoppelt werden, um eine Abbremsbewegung des Fahrzeugs mit einer Ausweichbewegung zu verbinden.

Grundlage derartiger Fahrerassistenzsysteme ist die Ermittlung und Auswertung von Messwerten. Überschreiten die Messwerte zugeordnete Grenzwerte, erfolgt über das Fahrerassistenzsystem ein Eingriff.

Die EP 2 111 796 A1 offenbart ein Verfahren zur Bewertung des Verhaltens des Fahrers und die Einordnung in einen hohen, einen mittleren und einen geringeren Aufmerksamkeitszustand. Die Einordnung erfolgt auf der Grundlage der Beobachtung des Blinzelns des Fahrers unter Zugrundelegung eines Hidden Markov Models. Das Blinzeln, das mithilfe einer Innenraumkamera festgestellt wird, wird in insgesamt neun verschiedene Kategorien unterteilt, aus denen die Zuordnung zu einer der drei Aufmerksamkeitskategorien erfolgt.

Der Erfindung liegt die Aufgabe zugrunde, das Fahrerverhalten im Fahrzeug zu analysieren, so dass beispielsweise Fahrerassistenzsysteme mit höherer Genauigkeit auf die aktuelle Fahrsituation eingestellt werden können.

Diese Aufgabe wird erfindungsgemäß mit den Merkmalen des Anspruches 1 gelöst. Die Unteransprüche geben zweckmäßige Weiterbildungen an.

### Offenbarung der Erfindung

Das erfindungsgemäße Verfahren wird zur Bewertung des Fahrerverhaltens in einem Fahrzeug herangezogen. Hierbei können objektive und/oder subjektive Fahrerzustände auf der Grundlage des Fahrerverhaltens ermittelt und bewertet werden, wobei zwischen verschiedenen Verhaltenskategorien unterschieden wird. Bei dem Verfahren werden sensorisch Messwerte ermittelt, die den unterschiedlichen Verhaltenskategorien des Fahrers mit verschiedenen Wahrscheinlichkeiten zugeordnet werden. Eine Verhaltenskategorie wird als zutreffend erkannt, falls die zugeordnete Wahrscheinlichkeit einen Schwellenwert übersteigt. Erfindungsgemäss wird aus einer Umfeldsensorik der Abstand zu einem Drittfahrzeug oder zu seitlichen Fahrbahnbegrenzungen ausgewertet.

Diese Ausführung hat den Vorteil, dass auf der Grundlage eines probabilistischen Verfahrens zwischen den verschiedenen Verhaltenskategorien unterschieden werden kann, wobei je nach zutreffender Verhaltenskategorie beispielsweise ein Fahrerassistenzsystem unterschiedlich parametriert werden kann. Zum Beispiel können verschiedene Verhaltenskategorien für den aktuellen Konzentrationszustand des Fahrers unterschieden werden, beispielsweise als eine erste Kategorie der Zustand "wach" bzw. "hoch konzentriert", eine mittlere Kategorie mit einem durchschnittlich konzentrierten Fahrer und eine weitere Kategorie mit einem wenig konzentrierten Fahrer. Ergibt die Auswertung auf der Grundlage des probabilistischen Modells unter Berücksichtigung der Sensordaten, dass der Fahrer unkonzentriert ist, so können beispielsweise für einen Bremsassistenten oder für ein elektronisches Stabilitätsprogramm (ESP) Grenz- bzw. Schwellenwerte herabgesetzt werden, um einen früheren und/oder stärkeren Eingriff des betreffenden Fahrerassistenzsystems zu ermöglichen. Bei einem durchschnittlich konzentrierten Fahrer werden dagegen die Grenzwerte vorteilhafterweise nur geringfügig modifiziert, wohingegen bei einem hoch konzentrierten Fahrer keine Änderung der Voreinstellungen der Grenzwerte im Fahrerassistenzsystem erforderlich ist.

Es ist auch denkbar, bei einem hoch konzentrierten Fahrer die Grenzwerte so zu verändern, dass ein späterer Eingriff als im Normalzustand erfolgt. Bei warnenden Systemen bzw. Systemen mit mehreren Warnstufen in der Eingriffskaskade kann sich ein hoch konzentrierter Fahrer nach seinem subjektiven Empfinden zu oft und zu früh gewarnt fühlen. Eine Anpassung der Grenzwerte würde die Anzahl der vom Fahrer als Falschwarnungen empfundenen Meldungen senken und die Systemakzeptanz erhöhen.

Auch können beispielsweise Reaktions- bzw. Zeitgrenzen bis zum Eingriff des Fahrerassistenzsystems modifiziert werden, insbesondere bei einem unterdurchschnittlich konzentrierten Fahrer herabgesetzt werden. Auf diese Weise wird fahrerindividuell sowie situationsbezogen eine Anpassung im Fahrzeug mit einhergehender verbesserter Sicherheit erreicht.

Mit Hilfe des probabilistischen Verfahrens kann somit eine Wahrscheinlichkeitsaussage über eine bestimmte, aktuell geltende Verhaltenskategorie des Fahrers getroffen werden, was zur Grundlage für die Parametrierung eines Aktors im Fahrzeug, beispielsweise eines Fahrerassistenzsystems gemacht werden kann. Es können grundsätzlich alle einstellbaren Komponenten im Fahrzeug in Abhängigkeit der aktuellen Fahrerverhaltenskategorie modifiziert werden. Neben den Fahrerassistenzsystemen wie zum Beispiel einem Brems- oder Lenkassistenten oder einem elektronischen Stabilitätsprogramm kann dies auch Parameter des Antriebs wie zum Beispiel Steuerzeiten betreffen oder den Eingriffs- bzw. Auslösezeitpunkt, zum Beispiel bei einem drohenden Unfall die verbleibende Restzeit bis zum einem automatischen Bremseingriff oder Lenkeingriff.

Indem den verschiedenen Verhaltenskategorien auf der Grundlage sensorisch ermittelter Daten Wahrscheinlichkeiten zugeordnet werden, besteht eine erhöhte Sicherheit für ein korrektes Erkennen der aktuelle geltenden Verhaltenskategorie des Fahrers. Die Gefahr einer Fehlentscheidung ist reduziert.

Bei dem Verfahren können komplexe Fahrerzustandsinformationen erhoben sowie Umfelddaten einbezogen werden. Der mentale Zustand des Fahrers sowie Zustandsübergänge können in Abhängigkeit von Sensordaten modelliert werden. Der ermittelte Fahrerzustand kann verwendet werden, um Fahrerassistenzsysteme in Ihrem Verhalten anzupassen Zweckmäßigerweise werden während des Fahrbetriebs fortlaufende Sensordaten ermittelt, die den verschiedenen Verhaltenskategorien zugeordnet werden. Hierdurch besteht die Möglichkeit Änderungen in der Verhaltenskategorie des Fahrers zu erfassen und die neu erkannte Verhaltenskategorie zur Grundlage weiterer Einstellungen im Fahrzeug zu machen. Beispielsweise kann während einer länger andauernden Fahrt die Konzentration des Fahrers nachlassen, was anhand der Sensordaten erkannt wird, woraufhin die Verhaltenskategorie in Richtung einer weniger konzentrierten Verhaltensweise gewechselt wird. Dementsprechend kommt ein sich unterscheidender Parametersatz zum Tragen, der einem oder mehreren Aktoren bzw. Systemen im Fahrzeug zugrundegelegt wird.

Die fortlaufende Ermittlung und Bewertung der Sensordaten hat außerdem den Vorteil, dass eine höhere Wahrscheinlichkeit für eine erkannte Verhaltenskategorie erreicht wird. Ändern sich die Sensordaten für eine längere Zeit nicht oder nur geringfügig, so steigt die Wahrscheinlichkeit für die Beibehaltung einer Kategorie immer weiter an.

Ein Wechsel zwischen den verschiedenen Verhaltenskategorien findet statt, wenn die Wahrscheinlichkeit für die neue Verhaltenskategorie, in die gewechselt werden soll, einen zugeordneten Wahrscheinlichkeits-Schwellenwert übersteigt. Die Wahrscheinlichkeits-Schwellenwerte können für die verschiedenen Verhaltenskategorien gleich oder auch unterschiedlich sein. Weiterhin ist es möglich, feste Schwellenwerte vorzugeben oder veränderlich anpassbare Schwellenwerte, die insbesondere von weiteren Kenn- oder Zustandsgrößen des Fahrzeugs oder des Fahrers abhängen können.

Als probabilistisches Verfahren zur Bewertung des Fahrerverhaltens wird, gemäß vorteilhafter Ausführung, ein Hidden Markov Model (HMM) eingesetzt. Hierbei handelt es sich um ein stochastisches Model mit Übergangswahrscheinlichkeiten zwischen verschiedenen aktuellen Zuständen. Grundsätzlich kommen aber auch sonstige probabilistische Verfahren für die Zuordnung der Sensordaten zu den verschiedenen Verhaltenskategorien des Fahrers in Betracht.

Die Sensorik zur Ermittlung der Sensordaten, die der Zuordnung zu den Verhaltenskategorien zugrundegelegt werden, befindet sich im Fahrzeug und dient beispielsweise dazu, den Fahrer oder eine Fahrerbetätigung zu beobachten bzw. zu ermitteln. Beispielsweise kann die Pedalbetätigung durch den Fahrer ermittelt werden, zum Beispiel durch Sensoren am betreffenden Gas- oder Bremspedal, über die die Pedalgeschwindigkeit und/oder -beschleunigung gemessen wird. Es sind auch Messungen unmittelbar am Fahrer möglich, beispielsweise die Erfassung der Blickrichtung, der Fußbetätigung oder des vegetativen Systems des Fahrers, zum Beispiel des Pulsschlags.

Das probabilistische Verfahren kann in einem vorgestalteten Trainingsschritt trainiert werden, bei dem zur Bewertung des Fahrerverhaltens ältere Messreihen ausgewertet werden, um eine Wahrscheinlichkeitszuordnung zu den verschiedenen Verhaltenskategorien zu erhalten. Ein derartiger Trainingsschritt setzt insbesondere auf vorgegebene Initialwerte auf, welche während des Trainingsschrittes verbessert und der Realität angenähert werden. Im laufenden Verfahren wird anschließend auf die verbesserten Wahrscheinlichkeitswerte zurückgegriffen, welche den verschiedenen Verhaltenskategorien zugeordnet sind. Bei den Wahrscheinlichkeitswerten handelt es sich zum Beispiel um Wahrscheinlichkeitsfunktionen wie zum Beispiel einer Gauss'schen Verteilungskurve, wobei die bestimmenden Parameter der Verteilungskurve wie Mittelwert bzw. Position und Standardabweichung bzw. Höhe im Trainingsschritt bestimmt werden.

Gegebenenfalls wird auch im laufenden Betrieb ein Trainingsschritt durchgeführt, um aus den aktuell gewonnenen Messwerten eine weitere Verbesserung der zugrundeliegenden Wahrscheinlichkeitsfunktionen bzw. -verteilungen für die verschiedenen Verhaltenskategorien zu erhalten.

Es genügt grundsätzlich, Messwerte im probabilistischen Verfahren zur Bestimmung der Verhaltenskategorie zu berücksichtigen, welche das Fahrerverhalten, den Fahrzustand des Fahrzeugs oder die Fahrzeugsituation in Bezug auf dritte Fahrzeuge oder außenliegende Objekte widerspiegeln. Es kann gegebenenfalls aber vorteilhaft sein, in dem probabilistischen Verfahren zusätzlich sonstige Kenngrößen zu berücksichtigen wie zum Beispiel die verbleibende Restzeit bis zum Eintritt eines prognostizierten Unfalls.

Das Verfahren läuft in einem Regel- bzw. Steuergerät im Fahrzeug ab. Das Regel- bzw. Steuergerät kann gegebenenfalls Bestandteil eines Fahrerassistenzsystems sein bzw. mit einem Fahrerassistenzsystem zusammenwirken, dessen Parametrierung in Abhängigkeit der erkannten Verhaltenskategorie eingestellt wird.

Weitere Vorteile und zweckmäßige Ausführungen sind den weiteren Ansprüchen, der Figurenbeschreibung und den Zeichnungen zu entnehmen. Es zeigen:
- Fig. 1: in schematischer Darstellung ein System zur Bewertung des Fahrerverhaltens, wobei die erkannte Verhaltenskategorie einem nachgeschalteten Fahrerassistenzsystem zur Parametrierung zugeführt wird,
- Fig. 2: eine 3x3-Matrix mit Wechselwahrscheinlichkeiten zwischen verschiedenen Verhaltenskategorien des Fahrers,
- Fig. 3: eine Matrix mit Wahrscheinlichkeitsfunktionen für verschiedene Verhaltenskategorien in Abhängigkeit sensorisch ermittelter Werte.

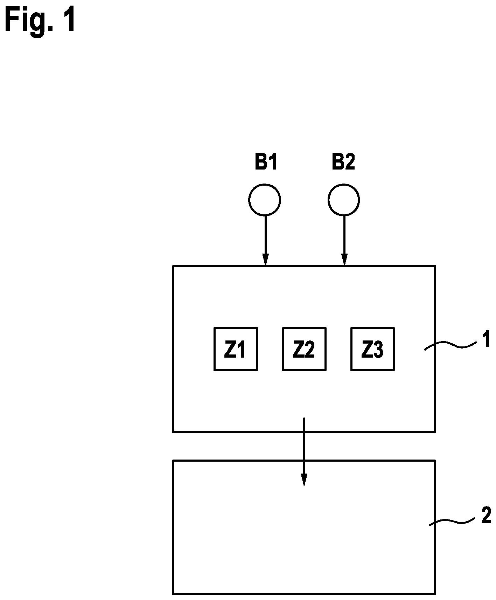

Fig. 1 zeigt ein System 1 zur Bewertung des Fahrerverhaltens in einem Fahrzeug, das ein in einem Regel- bzw. Steuergerät ablaufendes ein Verfahren umfasst. Bei dem Verfahren im System 1 wird zwischen unterschiedlichen Verhaltenskategorien des Fahrers unterschieden, die in Fig. 1 beispielhaft mit Z1, Z2 und Z3 bezeichnet sind. Diese Verhaltenskategorien betreffen jeweils einen bestimmten Fahrerzustand, wobei Z1 beispielsweise für einen hoch konzentrierten Fahrer, Z2 für einen durchschnittlich konzentrierten Fahrer und Z3 für einen unkonzentrierten Fahrer steht.

Dem System 1 werden Messwerte B1 und B2 von zwei unterschiedlichen Sensoren zugeführt, beispielsweise Messwerte B1 zur Charakterisierung der Bremspedalbetätigung und Messwerte B2 zur Charakterisierung der Blickrichtung des Fahrers. Die Bremspedalbetätigung wird beispielsweise über einen Sensor am Bremspedal ermittelt, welcher die Bremspedalbeschleunigung zu messen in der Lage ist. Die Blickrichtung des Fahrers kann über ein Kamerasystem im Fahrzeug ermittelt werden.

Mit Hilfe der Sensordaten B1 und B2 kann auf den Konzentrationszustand des Fahrers geschlossen werden. Beispielsweise neigt ein unkonzentrierter Fahrer zu Schreckreaktionen, was über plötzliche, starke Bremspedalbetätigungen festgestellt werden kann. Außerdem entspricht das Blickverhalten bei unkonzentrierten Fahrern einem bestimmten Muster, welches ebenfalls sensorisch festgestellt werden kann. Durch die Berücksichtigung der Messwerte unterschiedlicher Sensoren kann der aktuelle Konzentrationszustand mit hoher Wahrscheinlichkeit festgestellt und von anderen Reaktionen, beispielsweise einem plötzlichen, berechtigten Bremsvorgang eines konzentrierten Fahrers, unterschieden werden.

Der Bestimmung der aktuellen Verhaltenskategorie Z1, Z2 und Z3 des Fahrers liegt ein probabilistisches Verfahren zugrunde, bei dem es sich im Ausführungsbeispiel um ein Hidden Markov Model (HMM) handelt. Hierbei wird jedem Verhaltenszustand Z1, Z2 und Z3 des Fahrers aus der Messreihe jedes Sensors eine Wahrscheinlichkeit zugeordnet. Übersteigt die Wahrscheinlichkeit in einem Fahrerzustand Z1, Z2 oder Z3 einen gegebenen Schwellen- bzw. Grenzwert, wird diese Verhaltenskategorie als zutreffend erkannt, woraufhin ein Signal erzeugt wird, das dem nachgeordneten System 2 als Eingang zugeführt wird, bei dem es sich beispielsweise um ein Fahrerassistenzsystem wie zum Beispiel einem Brems- und Lenkassistenten handelt. Jedem Fahrerzustand Z1, Z2, Z3 ist ein bestimmter Parametersatz für das Fahrerassistenzsystem zugeordnet. Nach dem Erkennen der zutreffenden Verhaltenskategorie wird der entsprechende Parametersatz im Fahrerassistenzsystem 2 aktiviert. Somit ist es möglich, in Abhängigkeit von der aktuellen Fahrersituation das Assistenzsystem zu parametrieren und in bestmöglicher Weise an den aktuellen Zustand des Fahrers anzupassen.

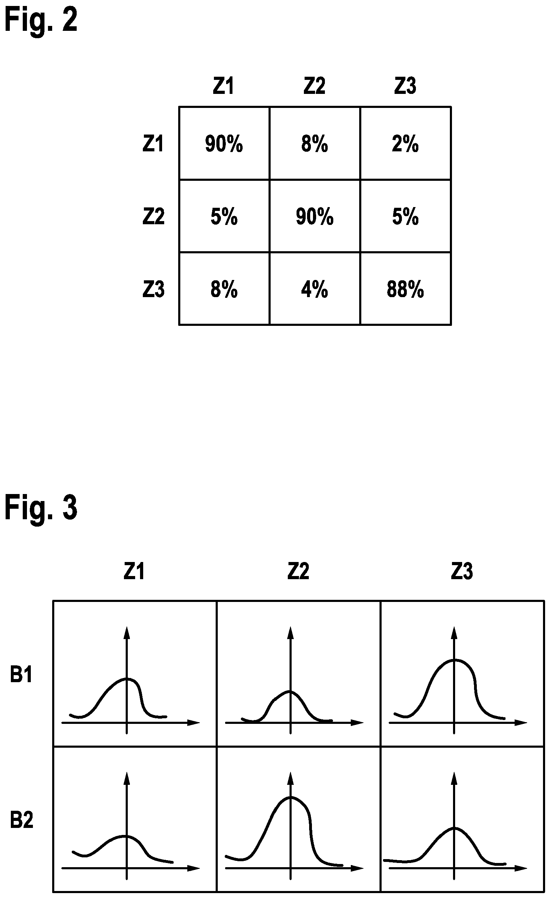

In Fig. 2 sind Wechselwahrscheinlichkeiten in einer 3x3-Matrix zwischen den verschiedenen Fahrerzuständen Z1, Z2 und Z3 dargestellt. An der linken Seite der Matrix befinden sich die Ausgangszustände, an der oberen Seite die Zielstände. Entlang der Hauptdiagonalen sind hohe Wahrscheinlichkeitswerte eingetragen, da ein aktuell geltender Fahrerzustand mit einer erhöhten Wahrscheinlichkeit auch in der nächsten Zukunft erhalten bleibt und ein Wechsel in eine andere Verhaltenskategorie unwahrscheinlich ist. Dementsprechend sind die Wahrscheinlichkeitswerte für den Wechsel zwischen unterschiedlichen Fahrerzuständen signifikant geringer.

Beispielsweise ist in der ersten Zeile der Matrix gemäß Fig. 2 im ersten Feld eine Wahrscheinlichkeit von 90 % eingetragen, was bedeutet, dass mit dieser Wahrscheinlichkeit der Fahrerzustand Z1 in nächster Zukunft beibehalten wird. Im zweiten Feld, das einem Wechsel des Fahrerzustandes Z1 zu Z2 entspricht, ist eine Wahrscheinlichkeit von 8 % eingetragen. Das dritte Feld weist eine Wahrscheinlichkeit von 2 % auf; mit dieser Wahrscheinlichkeit erfolgt ein Wechsel vom Fahrerzustand Z1 zu Fahrerzustand Z3. In der Summe ergeben die Wahrscheinlichkeiten pro Zeile immer 100 %.

Entsprechende Wahrscheinlichkeiten ergeben sich für die zweite Zeile für einen Wechsel vom Fahrerzustand Z2 in einen anderen Fahrerzustand und in der dritten Zeile vom Wechsel des Fahrerzustandes Z3 in einen anderen Fahrerzustand.

In Fig. 3 ist die Zuordnung der Messwerte B1 und B2 zu den Fahrerzuständen Z1, Z2 und Z3 dargestellt. Die Zuordnung erfolgt über Wahrscheinlichkeitsfunktionen, die als Gauss'sche Verteilungsfunktion ausgeführt sind, wobei in den verschiedenen Feldern Verteilungsfunktionen mit unterschiedlicher Höhe bzw. Standardabweichung (Wahrscheinlichkeit) und Breite bzw. Mittelwert/Position (Messwert) dargestellt sind. Jeder Messwert B1 sowie B2 wird je einer Fahrerkategorie Z1, Z2 und Z3 zugeordnet, wobei gleiche Messwerte, welche der X-Achse in den Verteilungsfunktionen entsprechen, zu unterschiedlichen Wahrscheinlichkeiten (Y-Achse) führen. In der Summe werden pro Zeile, also jeweils für die Messwerte B1 und B2, Wahrscheinlichkeiten von insgesamt 100 % erreicht, die sich auf die drei Felder für Z1, Z2 und Z3 aufteilen. Aufgrund der unterschiedlich ausgeführten Verteilungsfunktionen führt der gleiche Messwert pro Zeile jedoch in jedem Feld Z1, Z2, Z3 zu einem sich unterscheidenden Wahrscheinlichkeitswert.

Die Wahrscheinlichkeits- bzw. Verteilungsfunktionen in den verschiedenen Feldern werden in einem vorgeschalteten Trainingsschritt ermittelt, bei dem beispielsweise ältere Messreihen ausgewertet und den verschiedenen Verhaltenskategorien Z1 bis Z3 zugeordnet werden.

Die Ermittlung der Messwerte B1 und B2 wird im laufenden Fahrbetrieb kontinuierlich durchgeführt. Gleichbleibende Messdaten führen zu gleichbleibenden Wahrscheinlichkeiten in den verschiedenen Feldern, wobei mit fortschreitender Zeit ein höheres Maß an Sicherheit gewonnen wird, was sich in einem erhöhten Wahrscheinlichkeitswert ausdrückt. Überschreitet der Wahrscheinlichkeitswert in einem der Felder Z1, Z2 und Z3 den zugeordneten Wahrscheinlichkeitsgrenzwert, kann mit ausreichender Sicherheit davon ausgegangen werden, das eine zutreffende Verhaltenskategorie vorliegt, woraufhin wie in Fig. 1 beschrieben eine der betreffende Verhaltenskategorie entsprechender Parametersatz im Fahrerassistenzsystem aktiviert werden kann.

## Patentansprüche

1. Verfahren zur Bewertung des Verhaltens des Fahrers in einem Fahrzeug, bei dem Sensordaten ermittelt und das Fahrerverhalten auf der Grundlage der Sensordaten bewertet wird, **dadurch gekennzeichnet, dass** aus einer Umfeldsensorik der Abstand zu einem Drittfahrzeug oder zu seitlichen Fahrbahnbegrenzungen ausgewertet wird und verschiedene Verhaltenskategorien unterschieden werden und jeder Verhaltenskategorie die Sensordaten mit einer Wahrscheinlichkeit zugeordnet werden, wobei eine Verhaltenskategorie als zutreffend erkannt wird, falls die zugeordnete Wahrscheinlichkeit einen Schwellenwert übersteigt.

2. Verfahren nach Anspruch 1, **dadurch gekennzeichnet, dass** während des Fahrbetriebs fortlaufend Sensordaten ermittelt werden, die den verschiedenen Verhaltenskategorien zugeordnet werden.

3. Verfahren nach Anspruch 1 oder 2, **dadurch gekennzeichnet, dass** ein Wechsel von einer ersten zu einer zweiten Verhaltenskategorie stattfindet, falls die Wahrscheinlichkeit für die zweite Verhaltenskategorie einen Schwellenwert übersteigt.

4. Verfahren nach einem der Ansprüche 1 bis 3, **dadurch gekennzeichnet, dass** als probabilistisches Verfahren zur Bewertung des Fahrerverhaltens ein Hidden Markov Model (HMM) eingesetzt wird.

5. Verfahren nach einem der Ansprüche 1 bis 4, **dadurch gekennzeichnet, dass** Sensordaten einer Fahrzeugsensorik verwendet werden, mit der der Fahrer oder eine Fahrerbetätigung beobachtbar ist.

6. Verfahren nach einem der Ansprüche 1 bis 5, **dadurch gekennzeichnet, dass** in einem vorgeschalteten Trainingsschritt dem zugrunde liegenden probabilistischen Verfahren zur Bewertung des Fahrerverhaltens ältere Messreihen zur Ermittlung von den Verhaltenskategorien zugeordneten Wahrscheinlichkeitsfunktionen zugeführt werden.

7. Verfahren nach einem der Ansprüche 1 bis 6, **dadurch gekennzeichnet, dass** während des Fahrbetriebs dem zugrunde liegenden probabilistischen Verfahren zur Bewertung des Fahrerverhaltens aktuelle Messreihen zur Ermittlung von den Verhaltenskategorien zugeordneten Wahrscheinlichkeitsfunktionen zugeführt werden.

8. Verfahren nach einem der Ansprüche 1 bis 7, **dadurch gekennzeichnet, dass** zusätzliche, von der aktuellen Fahrsituation abhängige Einflussgrößen bei der Bestimmung der Wahrscheinlichkeit einer Verhaltenskategorie berücksichtigt werden, beispielsweise die verbleibende Restzeit bis zum Eintritt eines Unfalls.

9. Regel- bzw. Steuergerät ausgelegt zur Durchführung des Verfahrens nach einem der Ansprüche 1 bis 8.

10. Fahrerassistenzsystem in einem Fahrzeug mit einem Regel- bzw. Steuergerät nach Anspruch 9, wobei die Parametrierung des Fahrerassistenzsystems in Abhängigkeit der erkannten Verhaltenskategorie eingestellt wird.

## Claims

1. Method for rating the behaviour of the driver in a vehicle, in which sensor data are ascertained and the driver behaviour is rated on the basis of the sensor data, **characterized in that** an ambient sensor system is used to evaluate the distance from a third-party vehicle or from lateral road boundaries and a distinction is drawn between different behaviour categories and each behaviour category is assigned the sensor data with a probability, wherein a behaviour category is identified as applicable if the assigned probability exceeds a threshold value.

2. Method according to Claim 1, **characterized in that** sensor data assigned to the different behaviour categories are ascertained continually during the driving mode.

3. Method according to Claim 1 or 2, **characterized in that** a change from a first to a second behaviour category takes place if the probability of the second behaviour category exceeds a threshold value.

4. Method according to one of Claims 1 to 3, **characterized in that** the probabilistic method used for rating the driver behaviour is a Hidden Markov Model (HMM).

5. Method according to one of Claims 1 to 4, **characterized in that** sensor data of a vehicle sensor system by means of which the driver or a driver activity is observable are used.

6. Method according to one of Claims 1 to 5, **characterized in that** in a preceding training step the underlying probabilistic method for rating the driver behaviour is supplied with earlier measurement series for ascertaining probability functions assigned to the behaviour categories.

7. Method according to one of Claims 1 to 6, **characterized in that** during the driving mode the underlying probabilistic method for rating the driver behaviour is supplied with current measurement series for ascertaining probability functions assigned to the behaviour categories.

8. Method according to one of Claims 1 to 7, **characterized in that** additional influencing variables dependent on the current driving situation are taken into consideration for determining the probability of a behaviour category, for example the remaining time left before an accident occurs.

9. Closed-loop and open-loop controller designed to perform the method according to one of Claims 1 to 8.

10. Driver assistance system in a vehicle having a closed-loop and open-loop controller according to Claim 9, wherein the parameterization of the driver assistance system is adjusted on the basis of the identified behaviour category.

## Revendications

1. Procédé d'évaluation du comportement du conducteur dans un véhicule, avec lequel des données de capteur sont déterminées et le comportement du conducteur est évalué sur la base des données de capteur, **caractérisé en ce que** la distance par rapport à un véhicule tiers ou des délimitations latérales de la voie de circulation sont interprétées et différentes catégories de comportement sont différenciées à partir d'un système de détection d'environnement et les données de capteur sont associées à chaque catégorie de comportement avec une probabilité, une catégorie de comportement étant reconnue concordante dans le cas où la probabilité associée dépasse une valeur de seuil.

2. Procédé selon la revendication 1, **caractérisé en ce que** des données de capteur qui sont associées aux différentes catégories de comportement sont déterminées continuellement pendant le régime de conduite.

3. Procédé selon la revendication 1 ou 2, **caractérisé en ce qu'**un changement d'une première à une deuxième catégorie de comportement a lieu dans le cas où la probabilité pour la deuxième catégorie de comportement dépasse une valeur de seuil.

4. Procédé selon l'une des revendications 1 à 3, **caractérisé en ce qu'**un modèle de Markov caché (MMC) est utilisé comme procédé probabilistique pour l'évaluation du comportement du conducteur.

5. Procédé selon l'une des revendications 1 à 4, **caractérisé en ce que** sont utilisées les données de capteur d'un système de détection de véhicule avec lequel peut être observé le conducteur ou une action du conducteur.

6. Procédé selon l'une des revendications 1 à 5, **caractérisé en ce que** dans une étape d'apprentissage en amont, des séries de mesures plus anciennes sont acheminées au procédé probabilistique sur lequel s'appuie l'évaluation du comportement du conducteur en vue de déterminer des fonctions de probabilité associées aux catégories de comportement.

7. Procédé selon l'une des revendications 1 à 6, **caractérisé en ce que** pendant le régime de conduite, des séries de mesures actuelles sont acheminées au procédé probabilistique sur lequel s'appuie l'évaluation du comportement du conducteur en vue de déterminer des fonctions de probabilité associées aux catégories de comportement.

8. Procédé selon l'une des revendications 1 à 7, **caractérisé en ce que** des grandeurs d'influence supplémentaires, dépendantes de la situation de conduite actuelle, sont prises en compte lors de la détermination de la probabilité d'une catégorie de comportement, par exemple le temps résiduel restant jusqu'à la survenance d'un accident.

9. Appareil de régulation et de commande, conçu pour mettre en oeuvre le procédé selon l'une des revendications 1 à 8.

10. Système d'assistance au conducteur dans un véhicule équipé d'un appareil de régulation et de commande selon la revendication 9, le paramétrage du système d'assistance au conducteur étant réglé en fonction de la catégorie de comportement reconnue.
